# DEMANDE DE BREVET EUROPEEN

(11) **EP 3 099 140 A1**
(43) Date de publication de la demande: **30.11.2016**
(21) Numéro de dépôt: 16170718.7
(22) Date de dépôt: 20.05.2016
(51) Int. Cl.: H05B 33/08, H05B 37/02, B60Q 1/00

(54) **MODULE LUMINEUX POUR UN DISPOSITIF LUMINEUX DE VÉHICULE AUTOMOBILE ET PROCÉDÉ D'UTILISATION CORRESPONDANT**

(30) Priorité: 26.05.2015 FR 1554709
(71) Demandeur: VALEO VISION, 93012 Bobigny Cedex (FR)
(72) Inventeur: LESAFFRE, Olivier-Sébastien, 93500 Pantin (FR); DUARTE, Marc, 93250 Villemomble (FR); MONCHY, Etienne, 95220 Herblay (FR); FAIVRE, Arnaud, 75019 Paris (FR); CROS, Christophe, 92000 Nanterre (FR)

(57) **Abrégé**

L'invention propose un module lumineux pour un dispositif lumineux d'un véhicule automobile. Le module selon l'invention comprend des moyens de pilotage de l'alimentation électrique d'au moins une source lumineuse montée en charge desdits moyens de pilotage et comprend en outre des moyens de commutation aptes à court-circuiter de manière sélective au moins une des sources lumineuses du module. L'invention concerne également un procédé permettant le court-circuitage sélectif d'au moins une source lumineuse d'un module lumineux selon l'invention.

## Description

L'invention a trait au domaine des dispositifs lumineux pour véhicules automobiles. En particulier, l'invention se rapporte à un module lumineux qui comprend un ensemble de sources lumineuses, dont des sous-ensembles peuvent être allumés ou éteints selon la fonction lumineuse requise.

Un dispositif lumineux ou d'éclairage d'un véhicule automobile permet en général d'implémenter une ou plusieurs fonctions lumineuses. Il s'agit par exemple des fonctions feux diurnes (DRL, « daytime running lamp »), des phares (HL, « head light »), feux de positions ou indicateurs de directions (TI, « turn indicator »). Selon la fonction, des intensités lumineuses différentes sont requises.

Il devient courant d'utiliser des diodes électroluminescentes, LED, pour implémenter une ou plusieurs fonctions lumineuses d'un véhicule automobile. Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. L'utilisation de LEDs permet de réaliser des signatures optiques originales lors de la conception de dispositifs d'éclairage de véhicules automobiles. Comme une fonction lumineuse est souvent réalisée par une pluralité de LEDs, il devient possible de proposer un module pour réaliser plusieurs fonctions. Par exemple, en allumant seulement la moitié des LEDs disponibles, on peut réaliser un feu moins intense par rapport à l'allumage de l'intégralité des LEDs disponibles. De même, des feux à défilement, qui impliquent un allumage séquentiel et prédéfini de LEDs disposés physiquement le long d'une courbe prédéfinie, sont réalisables.

Il est connu dans l'art d'utiliser un circuit de pilotage pour piloter l'alimentation d'une ou de plusieurs LEDs. Le circuit définit le courant qui traverse une branche montée en charge et comprenant le groupe de LEDs branchées en série. Il est également connu d'utiliser un circuit de pilotage dédié pour chacune parmi une pluralité de LEDs d'un dispositif lumineux. De cette façon, il devient possible de piloter chacune des LED de manière indépendante des autres LEDs du dispositif lumineux. Cette solution présente l'inconvénient d'être coûteuse puisqu'une pluralité de circuits de pilotage identiques doit être implémentée. En plus, une telle approche ne permet pas une mise à échelle, puisque le dispositif doit être entièrement adapté et conçu à nouveau si un paramètre du dispositif lumineux, par exemple le nombre de LEDs utilisé, est changé.

Alternativement, il est également connu d'intégrer dans le circuit de pilotage des interrupteurs qui permettent de court-circuiter une ou plusieurs LEDs branchées en charge. Un court-circuitage d'un groupe de LEDs implique un détournement du courant de charge, qui contourne le groupe en question sans allumer les LEDs qui en font partie. Une telle architecture permet d'allumer ou d'éteindre des groupes de LEDs parmi une pluralité de LEDs de manière indépendante en agissant sur les interrupteurs. Cependant, cette approche présente également des inconvénients puisqu'elle requiert une nouvelle conception du circuit de pilotage pour chaque fois que le nombre de LEDs utilisé dans un dispositif lumineux change.

L'invention a pour objectif de proposer un module lumineux et un procédé de court-circuitage d'au moins une source lumineuse d'un module lumineux selon l'invention, palliant à au moins un des inconvénients de l'art antérieur. L'invention à également pour objectif de proposer un dispositif lumineux comprenant au moins un module lumineux selon l'invention.

L'invention a pour objet un module lumineux pour un dispositif lumineux d'un véhicule automobile. Le module comprend au moins une branche de circuit électronique comprenant une pluralité de sources lumineuses, des moyens de pilotage de l'alimentation électrique d'au moins une source lumineuse de ladite branche qui est montée en charge desdits moyens de pilotage.
Le module est remarquable en ce qu'il comprend en outre des moyens de commutation pilotés indépendamment des sources lumineuses et aptes à désactiver de manière sélective au moins une des sources lumineuses de ladite branche.

De préférence, la désactivation sélective peut être réalisée par un court-circuitage sélectif.

Avantageusement, les moyens de pilotage, les moyens de commutation et ladite branche de circuit électrique forment chacune une unité, lesdites unités étant mécaniquement distinctes les unes des autres. Par exemple, chaque unité peut être disposée sur un support distinct, par exemple une carte de circuit imprimé qui lui est propre.

Avantageusement, le module lumineux peut comporter un canal d'alimentation connectant les moyens de pilotage à ladite branche de circuit électrique et un canal de commande connectant les moyens de pilotage aux moyens de commutation, le canal de commande étant distinct du canal d'alimentation. Le cas échéant, le module lumineux est dépourvu de canal de commande connectant directement les moyens de pilotage à la branche de circuit électrique. On entend par canal de commande un canal de connexion, par exemple un canal de transmission de données, destiné exclusivement à transporter des instructions d'activation et/ou de désactivation des sources lumineuses de ladite branche et par canal d'alimentation un canal de connexion destiné à propager exclusivement une alimentation de puissance des sources lumineuses de ladite branche.

De préférence, les moyens de commutation peuvent comprendre des moyens de réception aptes à recevoir un signal sur un canal de transmission de données. Les moyens de commutation peuvent également de préférence comprendre des moyens de commande aptes à commander de manière sélective, et en dépendance d'un signal reçu par les moyens de réception, l'état d'au moins un circuit de commutation relié aux bornes d'une ou de plusieurs sources lumineuses dans la branche de charge. Avantageusement, les sources lumineuses peuvent être montées en série dans ladite branche de charge.

De manière préférentielle, les moyens de commande peuvent comprendre un élément microcontrôleur. L'élément microcontrôleur peut être un élément microcontrôleur programmable.

Les moyens de réception peuvent de préférence être configurés pour recevoir et lire ou décoder un signal ou message et le relayer à l'élément de contrôle. Le message peut par exemple instruire le module lumineux à diminuer la luminosité émise de la moitié, par exemple en diminuant le rapport cyclique de l'alimentation électrique, lorsque toutes les sources lumineuses sont alimentées par une alimentation à modulation de largeur d'impulsion, également appelée PWM. Dans un tel cas exemplaire, les moyens de contrôle peuvent agir de manière prédéterminée pour désactiver chaque deuxième source lumineuse montée en série sur la branche de charge. De manière avantageuse, l'élément de contrôle peut avoir recours à une table de commutation stockée dans un élément de mémoire, qui met en relation chaque signal pouvant être reçu par les moyens de réception avec l'état (ouvert/fermé) de chacun des interrupteurs. Avantageusement, la réception d'un signal spécifique peut amener les moyens de contrôle à déclencher une séquence de commutation automatique. Par exemple, la réception d'un signal spécifique peut donner lieu à la désactivation séquentielle de plusieurs sous-ensembles de sources lumineuses de la branche. Ceci peut notamment permettre notamment la réalisation un feu à défilement. Cette architecture permet notamment une reprogrammation des moyens de commutation par chargement d'une table de commutation dans l'élément de mémoire des moyens de contrôle.

Les circuits de commutation peuvent de préférence comprendre au moins un transistor à effet de champ, FET. Il peut s'agit d'un transistor à effet de champ à grill métallique, MOSFET.

Le canal de transmission de données peut de manière préférée être un bus de type « controller area network », CAN, ou un bus de de type « local interconnect network », LIN, d'un véhicule automobile. Dans ce cas, les moyens de réception peuvent de préférence être des moyens aptes à recevoir des messages de type CAN ou LIN respectivement.

De préférence, la branche de charge du module peut comprendre une pluralité de sources lumineuses branchées en série.

La branche de charge peut préférentiellement comprendre un arrangement en parallèle de plusieurs sous-branches, chacune desquelles comprend au moins une source lumineuse, les sources lumineuses de chaque sous-branche étant montées en série.

Les sources lumineuses du module peuvent de manière préférentielle comprendre des puces semi-conductrices émettrices de lumière, par exemple des diodes électroluminescentes, LED, de haute ou de basse puissance. Les LEDs peuvent être des composant monopuces ou multipuces.

De préférence, les moyens de pilotage du module peuvent comprendre un convertisseur apte à convertir une tension continue d'entrée en une tension de charge différente de la tension d'entrée. Le convertisseur peut être du type buck-boost, de type « flyback », ou par exemple de type « single-ended primary-inductor converter », SEPIC.

L'invention à également pour objet un dispositif lumineux pour un véhicule automobile. Le dispositif est remarquable en ce qu'il comprend au moins un module lumineux conforme à l'invention.

L'invention à également pour objet un procédé pour alimenter de manière sélective une ou plusieurs sources lumineuses d'un dispositif lumineux d'un véhicule automobile. Le procédé est remarquable en ce qu'il comprend les étapes suivantes :
- mise à disposition d'un module lumineux conforme à l'invention;
- court-circuitage sélectif d'au moins une des sources lumineuses du module en dépendance d'un signal reçu par les moyens de commande sur un canal de transmission de données du véhicule automobile.

Grâce à l'invention, il devient possible d'utiliser un même circuit de pilotage de l'alimentation de plusieurs LEDs pour des dispositifs lumineux différents. L'invention propose des moyens de commutation dédiés, qui fonctionnent indépendamment du circuit de pilotage en question. La conception du circuit de pilotage et des moyens de commutation peut se faire de manière indépendante. Donc, si le nombre de LEDs d'un nouveau dispositif lumineux augmente par exemple par rapport à un mode de réalisation antérieur d'un tel dispositif, le même circuit de pilotage peut être réutilisé. Les moyens de commutation, qui sont réalisables rapidement et sans engendrer des frais de développement élevés, peuvent être mis à l'échelle en ajoutant des interrupteurs supplémentaires, afin de prendre en charge le nombre accru de LEDs alimentés par le circuit de pilotage.

L'invention augmente ainsi la flexibilité et réduit la complexité de conception pour des dispositifs lumineux pour véhicules automobiles, en particulier des dispositifs qui réalisent plusieurs fonctions lumineuses à l'aide des mêmes sources lumineuses, en alimentant celles-ci de manière sélective.

D'autres caractéristiques et avantages de la présente invention seront mieux compris à l'aide de la description et des dessins, qui ne sont présentés qu'à titre indicatif et non-limitatif de l'invention, et parmi lesquels :
- la figure 1 est une illustration schématique d'un mode de réalisation préférentiel du système selon l'invention ;
- la figure 2 est une illustration schématique d'un mode de réalisation préférentiel du système selon l'invention ;
- la figure 3 est une illustration schématique d'un mode de réalisation préférentiel du système selon l'invention.

Des références similaires sont utilisées pour décrire des concepts semblables à travers plusieurs modes de réalisations distincts. Par exemple, les références 100, 200 et 300 décrivent un module lumineux selon l'invention dans trois modes de réalisation distincts.

Les caractéristiques techniques décrites pour un mode de réalisation donné sont applicables à d'autres modes de réalisation de l'invention, sauf si le contraire est indiqué.

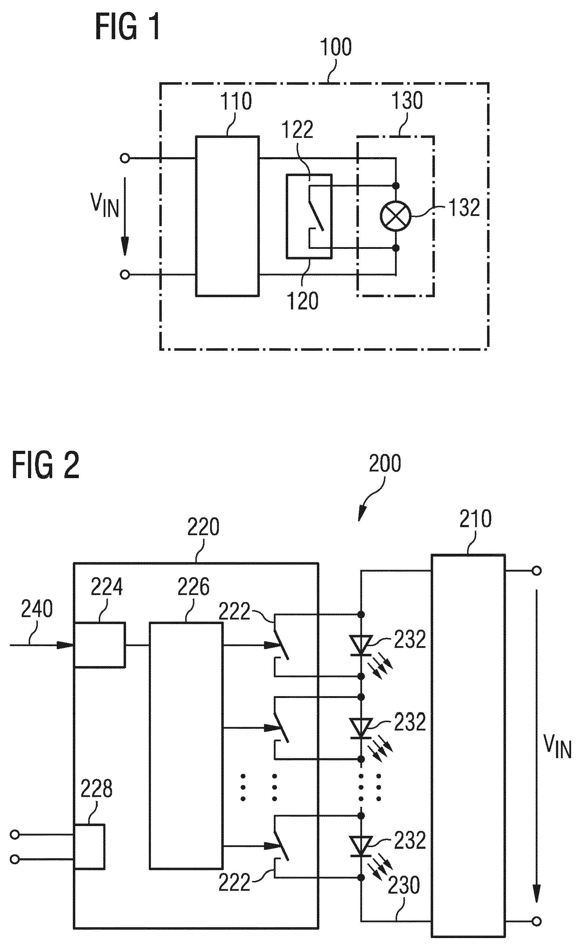

La figure 1 illustre de manière schématique un module lumineux 100 selon un mode de réalisation de l'invention. Un tel module trouve son application dans un dispositif lumineux d'un véhicule, et en particulier dans un tel dispositif utilisant une pluralité de sources lumineuses pour réaliser différentes fonctions lumineuses, par exemple les fonctions feux diurnes et phares. Le module comprend des moyens de pilotage 110 de l'alimentation électrique d'au moins une source lumineuse 132. Il peut à titre d'exemple s'agir d'un circuit de pilotage connu par l'homme du métier, qui fait intervenir un convertisseur en soi connu. De manière générale, les moyens de pilotage 110 sont alimentés par une source de tension continue, telle qu'une batterie non-illustrée d'un véhicule automobile. Ils sont capables de convertir la tension d'entrée en une tension de charge à valeur différente. Bien que la source lumineuse 132 soit montrée comme un seul composant sur la figure 1, l'homme du métier comprendra qu'il peut s'agir d'une pluralité de sources lumineuses 132 montées en série sur la branche de charge 130. Alternativement, la branche de charge peut comprendre un arrangement en parallèle de plusieurs sous-branches, chacune desquelles comprend au moins une source lumineuse.

Le module comprend également des moyens de commutation 120. Les moyens de commutation comprennent au moins un circuit qui implémente un circuit de commutation ou interrupteur 122. L'interrupteur est relié aux bornes soit d'une source lumineuse 132, soit d'un ensemble de sources lumineuses branchées en série. Lorsque les moyens de pilotage 110 alimentent la branche de charge 130 et que l'interrupteur 122 des moyens de commutation 120 est ouvert, les sources lumineuses en question sont alimentées en courant électrique. Lorsque l'interrupteur 122 est en état fermé, le courant électrique qui circule dans la branche de charge 130 est contourné est les sources lumineuses sont exclues de l'alimentation électrique. Les moyens de commutation sont alimentés indépendamment des sources lumineuses. En particulier les moyens de commutation 120 ne sont pas alimentés par les moyens de pilotage 110.

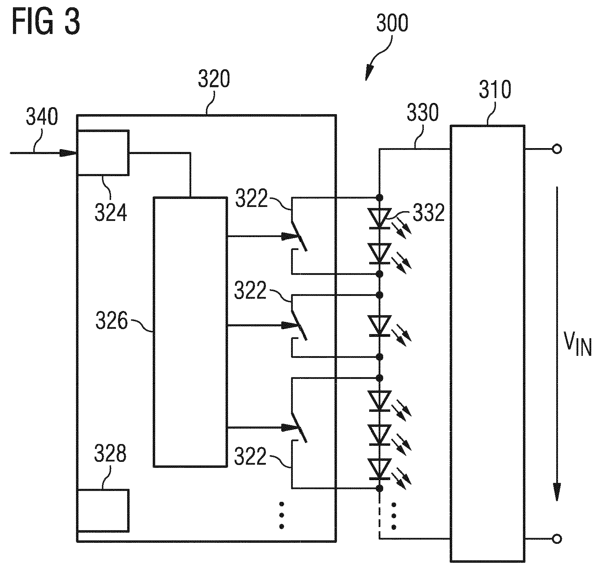

Selon un mode de réalisation préféré de l'invention, les moyens de pilotage 110, les moyens de commutation 120 et la branche de charge 130 sont réalisés sur des PCB (« printed circuit board ») physiquement distincts et reliés entre eux par des moyens de connexion électrique appropriés, par exemple par pontage. Dans les modes des réalisations montrés par les figures 2 et 3 respectivement, les sources lumineuses 232, 333 sont des diodes électroluminescentes, LED, soit de haute ou de basse puissance. De tels composants électroniques sont connus dans l'art et ne seront pas expliqués en détails dans le contexte de la présente invention. A titre exemplaire et non-limitatif, le PCB implémentant la branche de charge 130 peut comprendre 5 ou 12 éléments LEDs branchés en série.

La figure 2 montre de manière schématique un module lumineux 200 selon un mode de réalisation de l'invention. Chacun des interrupteur 222 des moyens de commutation 220 est relié aux bornes d'une des LEDs 232 montées sur la branche de charge 230. Un interrupteur permet donc de court-circuiter une LED. Chaque interrupteur peut par exemple être mis en oeuvre par un transistor, tel qu'un transistor à effet de champ, FET, en particulier un transistor à effet de champ à grill métallique, MOSFET.

Les moyens de commutation 220 comprennent un élément de contrôle 226 tel qu'un microcontrôleur qui comprend de préférence de moyens processeurs et une mémoire. L'élément de contrôle est préconfiguré pour qu'il commute l'état de chacun des interrupteurs 222, auxquels il est connecté électriquement, suite à la réception d'un signal prédéterminé, reçu par des moyens de réception 224. A titre exemplaire, le signal peut être un message reçu sur un bus de communication 240 du véhicule automobile. Les moyens de réception 224 sont dans ce cas configurés pour recevoir et lire ou décoder ledit message, et le relayer à l'élément de contrôle 226. Le message peut par exemple instruire le module 200 à diminuer la luminosité émise de la moitié, par exemple en diminuant le rapport cyclique de l'alimentation électrique, lorsque toutes les LEDs 232 sont alimentées par une alimentation à modulation de largeur d'impulsion, également appelée PWM. Dans un tel cas exemplaire, les moyens de contrôle 226 agissent de manière prédéterminée pour court-circuiter chaque deuxième LED du branchement en série 230. De manière avantageuse, l'élément de contrôle 226 à recours à une table de commutation stockée dans un élément de mémoire, qui met en relation chaque signal pouvant être reçu par les moyens de réception 224 avec l'état (ouvert/fermé) de chacun des interrupteurs 222. Avantageusement, la réception d'un signal spécifique peut amener les moyens de contrôle 226 à déclencher une séquence de commutation automatique. Par exemple, la réception d'un signal spécifique peut donner lieu au court-circuitage séquentiel de plusieurs sous-ensembles de LEDs de la branche 230. Ceci permet notamment de réaliser un feu à défilement. Cette architecture permet notamment une reprogrammation des moyens de commutation 220 par chargement d'une table de commutation dans l'élément de mémoire des moyens de contrôle.

Le bus de communication 240 sur lequel le module 200 reçoit des signaux peut de manière préférée être un bus de type « controller area network », CAN, ou de type « local interconnect network », LIN, d'un véhicule automobile. Ces architectures sont connues dans l'art et ne seront pas décrites en plus de détails dans le contexte de la présente invention. Les moyens de réception 224 sont dans ce cas des moyens aptes à recevoir et à décoder des messages de type CAN ou LIN respectivement. La figure 2 montre également des moyens d'alimentation 228 qui permettent l'alimentation électrique des moyens de commutation 220 indépendamment de l'alimentation électrique des sources lumineuses. De manière préférée, les moyens d'alimentation 228 sont reliés à une source de courant non-illustrée du véhicule automobile, telle qu'une batterie.

La figure 3 montre également de manière schématique un module lumineux 300 selon un mode de réalisation de l'invention. Contrairement à l'exemple montré par la figure 2, les interrupteurs 322 sont reliés aux bornes soit d'une, de deux ou de trois LEDs branchées en série au sein de la branche de charge 330. A l'aide de la description fournie, l'homme du métier saura adapter cette architecture à d'autres cas de figure sans pour autant sortir du cadre de la présente invention.

## Revendications

1. Module lumineux (100 ; 200; 300) pour un dispositif lumineux d'un véhicule automobile, le module comprenant au moins une branche de circuit électrique comprenant une pluralité de sources lumineuses, des moyens de pilotage (110 ; 200 ; 300) de l'alimentation électrique d'au moins une source lumineuse (132 ; 232 ; 332) de ladite branche (130 ; 230 ; 330) qui est montée en charge desdits moyens de pilotage (110 ; 210 ; 310),
**caractérisé en ce que** le module (100; 200; 300) comprend en outre des moyens de commutation (120 ; 220 ; 320) pilotés indépendamment des sources lumineuses (110 ; 210 ; 310) et aptes à désactiver de manière sélective au moins une des sources lumineuses (132 ; 232 ; 332) de ladite branche (130).

2. Module selon la revendication 1, **caractérisé en ce que** les moyens de commutation (220 ; 320) comprennent des moyens de réception (224 ; 324) aptes à recevoir un signal sur un canal de transmission de données (240 ; 340) et des moyens de commande (226 ; 326) aptes à commander de manière sélective, et en dépendance d'un signal reçu par les moyens de réception (224 ; 324), l'état d'au moins un circuit de commutation (222 ; 322) relié aux bornes d'une ou de plusieurs sources lumineuses dans la branche de charge (230 ; 330).

3. Module selon la revendication 2, **caractérisé en ce que** les moyens de commande (226 ; 237) comprennent un élément microcontrôleur.

4. Module selon une des revendications 2 ou 3, **caractérisé en ce que** les circuits de commutation (222 ; 232) comprennent au moins un transistor à effet de champ, FET.

5. Module selon une des revendications 2 à 4, **caractérisé en ce que** le canal de transmission de données (240 ; 340) est un bus de type « controller area network », CAN, ou de type « local interconnect network », LIN, d'un véhicule automobile, et **en ce que** les moyens de réception (224 ; 324) sont des moyens aptes à recevoir des messages de type CAN ou LIN respectivement.

6. Module selon une des revendications 1 à 5, **caractérisé en ce que** la branche de charge (130; 230; 330) comprend une pluralité de sources lumineuses branchées en série.

7. Module selon une des revendications 1 à 6, **caractérisé en ce que** la branche de charge (130 ; 230 ; 330) comprend un arrangement en parallèle de plusieurs sous-branches, chacune desquelles comprend au moins une source lumineuse, les sources lumineuses de chaque sous-branche étant montées en série.

8. Module selon une des revendications 1 à 7, **caractérisé en ce que** les sources lumineuses comprennent des puces semi-conductrices émettrices de lumière.

9. Module selon une des revendications 1 à 8, **caractérisé en ce que** les moyens de pilotage (110 ; 210 ; 310) comprennent un convertisseur apte à convertir une tension continue d'entrée en une tension de charge différente de la tension d'entrée.

10. Dispositif lumineux pour un véhicule automobile, **caractérisé en ce que** le dispositif comprend au moins un module lumineux (100 ; 200 ; 300) selon une des revendications 1 à 9.

11. Procédé pour alimenter de manière sélective une ou plusieurs sources lumineuses d'un dispositif lumineux d'un véhicule automobile, **caractérisé en ce que** le procédé comprend les étapes suivantes :
- mise à disposition d'un module lumineux (100 ; 200 ; 300) selon une des revendications 1 à 9 ;
- court-circuitage sélectif d'au moins une des sources lumineuses (132 ; 232 ; 332) du module (100 ; 200 ; 300) en dépendance d'un signal reçu par les moyens de commande (120 ; 220 ; 320) sur un canal de transmission de données du véhicule automobile.
